**Europäisches Patentamt**

**European Patent Office**

**Office européen des brevets**

(19)

(11) Veröffentlichungsnummer : **0 127 068**
**B1**

(12) **EUROPÄISCHE PATENTSCHRIFT**

(45) Veröffentlichungstag der Patentschrift :
26.04.89

(21) Anmeldenummer : 84105549.4

(22) Anmeldetag : 16.05.84

(51) Int. Cl.⁴ : **H 04 N   7/00, H 04 H   9/00**

(54) **Vorrichtung zum Erfassen von Daten über das Fernseheinschaltverhalten von Fernsehzuschauern.**

(30) Priorität : 25.05.83 DE 3318919

(43) Veröffentlichungstag der Anmeldung :
05.12.84 Patentblatt 84/49

(45) Bekanntmachung des Hinweises auf die Patenterteilung : 26.04.89 Patentblatt 89/17

(84) Benannte Vertragsstaaten :
AT BE CH DE FR GB IT LI LU NL SE

(56) Entgegenhaltungen :
DE–A– 1 913 722
FUNKSCHAU 1975, Heft 16, München
HUBERT MEIER "Kanal- und Zeitanzeiger auf dem Bildschrim", Seiten 37, 38

(73) Patentinhaber : TeleMetric Internationale Gesellschaft für Fernsehzuschauerforschung
Poststrasse 9
CH-6300 Zug (CH)

(72) Erfinder : Fischer, Peter
Dolderstrasse 40
CH-8032 Zürich (CH)

(74) Vertreter : Gesthuysen, Hans Dieter, Dipl.-Ing. et al
Patentanwälte Gesthuysen + von Rohr Huyssenallee
15 Postfach 10 13 33
D-4300 Essen 1 (DE)

EP 0 127 068 B1

## Beschreibung

Die Erfindung betrifft eine Vorrichtung zum Erfassen von Daten über das Fernseheinschaltverhalten von Fernsehzuschauern, nach dem Oberbegriff von Anspruch 1.

Bei der bekannten Vorrichtung, von der die Erfindung ausgeht (DE-A-1 913 722), ist zwingende Voraussetzung, daß von den Fernsehgesellschaften am jeweiligen Sendeort die für das Erfassen des Fernseheinschaltverhaltens erforderlichen Daten in das Fernsehbild eingebracht werden. Das ist für Zwecke der Demoskopie nicht besonders zweckmäßig, denn beispielsweise für die Werbewirtschaft wesentliche Informationen über das Fernseheinschaltverhalten von Fernsehzuschauern könnten mit dieser Vorrichtung nur ermittelt werden, wenn die entsprechenden Sendeanstalten mitwirkten.

Die für demoskopische Zwecke bestimmten und geeigneten Vorrichtungen zum Erfassen von Daten über das Fernseheinschaltverhalten von Fernsehzuschauern (DE-C-2 608 508) sind hingegen unzulänglich. Hier werden die interessierenden Daten, insbesondere Kanalnummer und ggf. Zuschaueridentifikation, von Hand über einen Zuschauer-Tastensatz eines entsprechenden Datenzusatzgerätes eingegeben. Die Einschaltdauer des Fernsehgerätes wird automatisch erfaßt, und zwar mit Hilfe eines Kontrollsensors. Ein Datenerfassungsteil und ein zwischen eine Fernsehantenne und ein entsprechendes Fernsehgerät geschaltetes Stationserfassungsteil sind vorgesehen, wobei das Stationserfassungsteil eine Betätigungseinheit, eine Abstimmeinheit und einen Konverter aufweist und wobei der Konverter die über die Abstimmeinheit empfangenen Antennensignale in einen bestimmten Fernsehfrequenzbereich umsetzt und die so umgesetzten Signale an das Fernsehgerät überträgt. Das Datenzusatzgerät weist bei dieser bekannten Vorrichtung eine Eingabelogik, eine Ausgabelogik und einen Datenspeicher auf. Über die Ausgabelogik können im Datenspeicher gespeicherte Daten über das Fernseheinschaltverhalten von Fernsehzuschauern an ein Modem abgegeben werden, mit dessen Hilfe dann eine Überspielung der Daten zu tarifgünstigen Zeiten über Telefonleitungen an die Datenzentrale erfolgen kann. Dort werden die ermittelten Daten dann ausgewertet. Bei dieser Vorrichtung müssen alle zu erfassenden Daten gewissermaßen « mechanisch » eingegeben werden, sie arbeitet nicht vollautomatisch, es können nicht genügend Daten eingebracht und erfaßt werden und diese Daten können nicht flexibel genug an Anforderungen der Demoskopie angepaßt werden. Außerdem ist die technische Konstruktion mit dem aufwendigen Konverter ziemlich kompliziert, die bekannte Vorrichtung ist also relativ teuer. Schließlich aber, und das ist von besonderer Bedeutung, werden mit der bekannten Vorrichtung nur Daten erfaßt, die im Zusammenhang mit einem neu gesendeten Fernsehbild stehen. Für den Einsatz in Verbindung mit Videogeräten ist die bekannte Vorrichtung nicht geeignet, da zu einem bestimmten Zeitpunkt auf Videokassette aufgenommene, jedoch erst zu einem späteren Zeitpunkt von betroffenen Zuschauern angesehene Sendungen überhaupt nicht erfaßt werden können. Das Fernseheinschaltverhalten von Fernsehzuschauern kann also nicht unter Berücksichtigung des zeitversetzten Fernsehens durch Nutzung von Videogeräten untersucht werden.

Der Erfindung liegt nun die Aufgabe zugrunde, die bekannte, eingangs erläuterte Vorrichtung so auszugestalten und weiterzubilden, daß eine flexible, automatische Einbringung und Erfassung der Daten auch unter Berücksichtigung des Einsatzes von Videogeräten unabhängig von einer Mitwirkung der Sendeanstalten möglich ist.

Die zuvor aufgezeigte Aufgabe ist bei einer Vorrichtung mit den Merkmalen des Oberbegriffs von Anspruch 1 durch die Merkmale des kennzeichnenden Teils von Anspruch 1 gelöst.

Erfindungsgemäß werden die Daten nicht am Sendeort unter Mitwirkung der Sendeanstalten in das Fernsehbild eingebracht, sondern am Empfangsort. Die erfindungsgemäße Vorrichtung ist also gewissermaßen autark. Es bedarf keiner Mitwirkung der Sendeanstalten. Die für die jeweiligen demoskopischen Ziele wesentlichen Daten über das Fernseheinschaltverhalten von Fernsehzuschauern können frei vorgegeben und in das Fernsehbild eingebracht werden. Entsprechend einfach sind Änderungen hinsichtlich des Datenspektrums vornehmbar. Insbesondere sind auch ganz unterschiedliche Datenspektren für unterschiedliche Zuschauergruppen vorgebbar, um bestimmte demoskopische Aussagen zu erzielen.

Wesentlich für die Lehre der Erfindung ist nun die technische Realisierung der autarken Vorrichtung am Empfangsort. Dazu ist zunächst die Anordnung des Datenzusatzgerätes wesentlich, die die Möglichkeit zur Beeinflussung des von der Fernsehantenne einlaufenden, zum Fernsehgerät geführten Empfangssignals ermöglicht. Weiter ist die Ausstattung des Datenzusatzgerätes mit einem entsprechend automatisch das Empfangssignal beeinflussenden Dateneingabeteil mit Synchronschalter von Bedeutung. Schließlich ist es wesentlich, wie Dateneingabeteil und Synchronschalter miteinander zusammenwirken, um die für die Erfindung wesentliche Einbringung der Daten am Empfangsort in das Fernsehbild sicherzustellen.

Mittels des erfindungsgemäß vorgesehenen Dateneingabeteils werden also die zu erfassenden Daten synchron am bestimmten, festgelegten Ort des Fernsehbildes eingebracht. Durch den Synchronschalter kann dabei beispielsweise die Modulation kurzzeitig auf den Weißwert geschaltet werden, so daß auf dem dann hellen Fernsehbild die zu erfassenden Daten als dunkle oder schwarze Punkte oder Streifen mit einem bestimmten Grau- bzw. Schwarzwert erscheinen können. Diese Daten können dann sehr einfach seriell erfaßt werden. Auch die Eingabe einer senderspezifischen Frequenz an dem entsprechenden Ort ist denkbar. Im Falle umgekehrter Modulation, wie bei manchen Fernsehsystemen vorgesehen, wird invers verfahren, d. h. das ankommende Signal wird im voraus um einen bestimmten Betrag verstärkt und durch einen Abschwächer wirder auf den Ausgangswert zurückgeschwächt. Durch bildsynchrones Nichtabschwächen wird dann eine entsprechende Helltastung erreicht.

Hinsichtlich des Erfassens der Daten von dem festgelegten Ort des Fernsehbildes beschreibt Anspruch 2 eine besonders zweckmäßige Lösung, bei der die zu erfassenden Daten optisch vom Bildschirm des Fernsehgerätes aus erfaßt werden. Das erlaubt die Verwirklichung der Erfindung unabhängig vom Alter und von der technischen Ausstattung des entsprechenden Fernsehgerätes. Die Einspielung der zu erfassenden Daten erfolgt über den Antenneneingang, die Erfassung der Daten selbst dann über den Bildschirm. Insbesondere auch bei Fehlen eines Videoausganges ist also diese Konstruktions in besonders zweckmäßiger Weise einsetzbar. Der zu verwendende optische Empfänger kann so gestaltet werden, daß er in einer Ecke des Bildschirmes optisch praktisch nicht auffällt. Ein besonderer Vorteil dieser Konstruktion ist die Nachrüstbarkeit an jedwedem Fernsehgerät.

Selbstverständlich kann das Datenerfassungsteil auch mit einem Videoausgang eines Fernsehgerätes verbunden sein, wenn nämlich ein solcher Videoausgang vorhanden ist. Diese Konstruktion ist unabhängig von der zuvor erläuterten Konstruktion möglich.

Ist eine Feststellung der Kanalnummer und/oder eine Senderidentifikation usw. nicht in den zu erfassenden Daten selbst enthalten, so läßt sich diese bei der erfindungsgemäßen Vorrichtung leicht durch die Merkmale des Anspruchs 4 erhalten. Mit dem Tuner und der Abstimmsteuerung läßt sich das Dateneingabeteil so nachsteuern von Kanal zu Kanal, bis das Datenerfassungsteil in dem am Fernsehgerät eingeschalteten Kanal die zu erfassenden Daten oder zumindest ein weggeschaltetes Fernsehbild feststellt. Nur dann, wenn der « richtige » Kanal mit zu erfassenden Daten versehen wird, erfolgt eine entsprechende Rückmeldung. Eine besonders einfache Variante zur Verwirklichung einer Senderidentifikation zeigt Anspruch 5.

Grundsätzlich ist darauf hinzuweisen, daß die zuvor erläuterte Erfindung zwar insbesondere ihre Vorteile bei der Untersuchung des Fernseheinschaltverhaltens von Fernsehzuschauern zeigt, jedoch nicht ausschließlich auf diesen Bereich beschränkt ist. Grundsätzlich lassen sich auf die erfindungsgemäß erläuterte Weise sehr umfangreiche Datenmengen in das Fernsehbild einbringen. Wesentlich ist für die erfindungsgemäße Vorrichtung, daß praktisch unabhängig von der Zweckbestimmung die Erfassung in das Fernsehbild eingebrachter Daten besonders einfach, leicht nachrüstbar und kostengünstig erfolgen kann. Das gilt insbesondere für die optoelektronische Erfassung der Daten vom Bildschirm aus. Dabei ist es von besonderm Vorteil, daß Daten erfaßt werden können, ganz gleich, ob ein Fernsehbild zeitlich gesehen oder als Videobild aufgenommen und zeitversetzt gesehen wird.

Im folgenden wird die Erfindung anhand einer lediglich ein Ausführungsbeispiel darstellenden Zeichnung näher erläutert ; es zeigt

Fig. 1 in einem ganz schematischen Blockdiagramm ein Ausführungsbeispiel der erfindungsgemäßen Vorrichtung und

Fig. 2 das Datenzusatzgerät der Vorrichtung gemäß Fig. 1 in vergrößerter und detaillierter Darstellung, gleichfalls in einem Blockschaltbild.

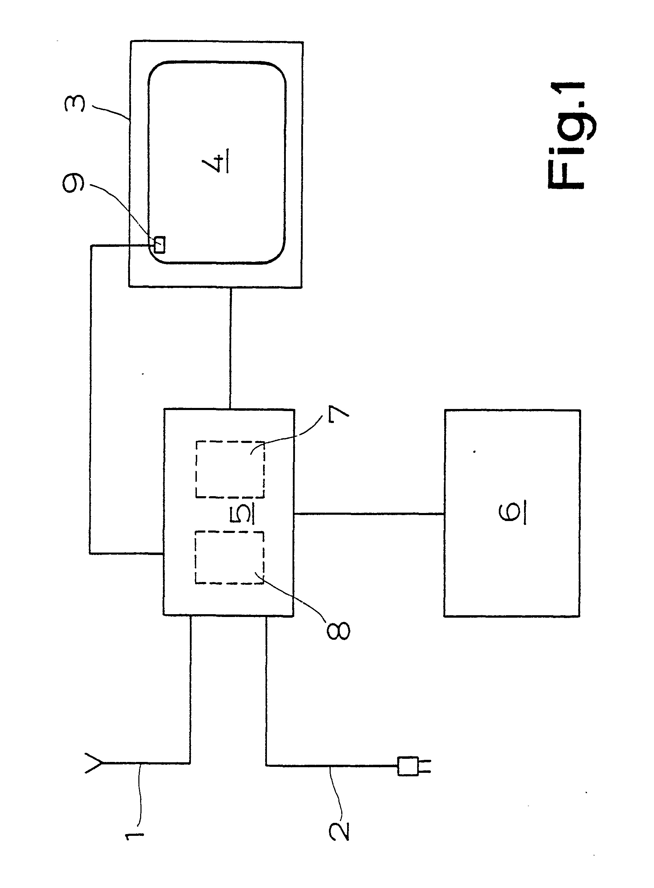

Fig. 1 zeigt zunächst eine Fernsehantenne 1 und eine Stromversorgung 2 sowie ein Fernsehgerät 3 mit einem Bildschirm 4, ein Datenzusatzgerät 5 und ein Modem 6, mit dessen Hilfe Daten über Telefonleitungen an eine Datenzentrale überspielt werden können.

Die in Fig. 1 schematisch dargestellte Vorrichtung dient zum Erfassen von Daten über das Fernseheinschaltverhalten von Fernsehzuschauern, wobei jeweils bei eingeschaltetem Fernsehgerät 3 u. a. die Kanalnummer, die Einschaltdauer, Datum und Uhrzeit der Einschaltung, Programmidentifikation usw. in Form zu erfassender Daten vorliegen. Mittels eines in Fig. 1 nur angedeuteten, einen Teil des Datenzusatzgerätes 5 bildenden Dateneingabeteils 7 sind die zu erfassenden Daten an einem bestimmten, festgelegten Ort in das zu empfangende Fernsehbild einbringbar, hier im dargestellten Ausführungsbeispiel in die linke obere Ecke des Fernsehbildes. Außerdem ist ein einen Teil des Datenzusatzgerätes 5 bildendes Datenerfassungsteil 8 vorgesehen, in Fig. 1 nur angedeutet, mit dessen Hilfe die zu erfassenden Daten von dem Ort des Fernsehbildes aus erfaßbar sind. Dazu ist das Datenerfassungsteil 8 mit einem auf dem Bildschirm 4 des Fernsehgerätes 3 in der linken oberen Ecke angeordneten optischen Empfänger 9 verbunden. Dieser optische Empfänger 9 wird von einer Gruppe von Fotodioden gebildet.

Die Einbringung der zu erfassenden Daten erfolgt also am Empfangsort, wobei am für die zu erfassenden Daten vorgesehenen Ort des Fernsehbildes mittels des Dateneingabeteils 7 das eigentliche Fernsehbild weggeschaltet wird. Die zu erfassenden Daten sind digitalisiert und können seriell erfaßt werden. Mittels des optischen Empfängers 9 läßt sich die Anwesenheit von zu erfassenden Daten am entsprechenden Ort des Fernsehbildes an diesem Ort zur Kanalidentifikation heranziehen.

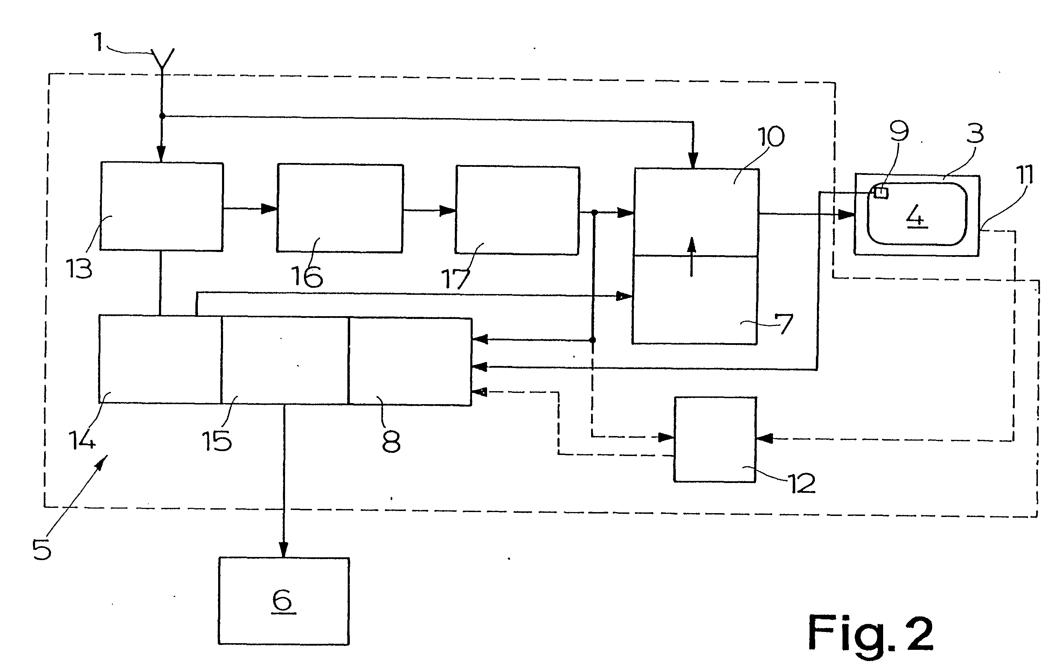

Fig. 2 zeigt nun das Datenzusatzgerät 5 genauer und im Blockschaltbild. Die zuvor schon erläuterten Teile des Datenzusatzgerätes 5, nämlich das Dateneingabeteil 7 und das Datenerfassungsteil 8, sind mit denselben Bezugzeichen eingetragen.

Im übrigen weist das in Fig. 2 im Blockschaltbild dargestellte Datenzusatzgerät 5 zunächst in Verbindung mit dem Dateneingabeteil 7 einen Synchronschalter 10 auf. Mittels des Synchronschalters 10 ist am vorgesehenen Ort des Fernsehbildes das Fernsehbild wegschaltbar und sind dort die zu erfassenden Daten einbringbar. Außerdem ist angedeutet, daß das Datenerfassungsteil 8 mit einem Videoausgang 11 des Fernsehgerätes 3 verbunden ist, wobei noch ein Videoumsetzer 12 dazwischen geschaltet ist. Da dies nur wahlweise vorhanden ist, sind die entsprechenden Verbindungen gestrichelt eingezeichnet.

Das Datenzusatzgerät 5 weist ferner einen Tuner 13 und eine Abstimmsteuerung 14 zum Nachsteuern des empfangenen Kanals auf. Kern des Datenzusatzgerätes 5 ist im übrigen ein Prozessor 15, der gleichzeitig den Datenspeicher beinhaltet. Eingezeichnet sind noch ein Demodulator 16 sowie ein Bild- und Zeilensynchronisator 17.

Die in Fig. 1 und 2 dargestellte Vorrichtung arbeitet folgendermaßen :

Parallel zu dem Fernsehgerät 3 wird auch im Datenzusatzgerät 5 das Fernsehprogramm empfangen. Der Bild- und Zeilensynchronisator 17 schaltet in einem vorgewählten Bereich des Fernsehbildes, also an dem bestimmten, festgelegten Ort des Fernsehbildes, über den Synchronschalter 10 das Fernsehbild weg. Während dieser Zeit wird das Fernsehbild hell, so daß mit gleicher Frequenz wie das abgeschaltete Signal vom Dateneingabeteil 7 ein Signal eingegeben werden kann, das die zu erfassenden Daten darstellt. Diese Daten werden hier digitalisiert mit bestimmten Grau- bzw. Schwarzwerten dargestellt.

Ist das Datenzusatzgerät 5 auf ein Programm eingestellt, das nicht mit dem am Fernsehgerät 3 eingestellten Programm übereinstimmt, so tritt am optischen Empfänger 9 keine Wegschaltung des Fernsehbildes auf. Das Datenzusatzgerät 5 erkennt also automatisch, daß das « falsche » Programm mit zu erfassenden Daten ausgestattet wird. Über die Abstimmsteuerung 14 und den Tuner 13 kann das Datenzusatzgerät 5 so nachgesteuert werden, daß schließlich am optischen Empfänger 9 eine Wegschaltung des Fernsehbildes festgestellt wird. Das Datenzusatzgerät 5 stellt nun das « richtige » Programm fest.

## Patentansprüche

1. Vorrichtung zum Erfassen von Daten über das Fernseheinschaltverhalten von Fernsehzuschauern mit einem am Empfangsort angeordneten, an eine Fernsehantenne (1) angeschlossenen Fernsehgerät (3) mit einem Bildschirm (4) und mit einem zugeordneten Datenzusatzgerät (5) mit einem Datenerfassungsteil (8), wobei das auf dem Bildschirm (4) des eingeschalteten Fernsehgeräts (3) gezeigte Fernsehbild an einem bestimmten, festgelegten Ort weggeschaltet oder überlagert und an diesem Ort verschiedene für das Fernseheinschaltverhalten relevante Daten, u. a. Kanalnummer, Einschaltdauer, Zuschaueridentifikation usw., vorzugsweise in kodierter Form, in dem Fernsehbild vorhanden sind und wobei die Daten mittels des Datenerfassungsteils (8) von dem Ort des Fernsehbildes aus automatisch aufnehmbar sind, dadurch gekennzeichnet, daß das Datenzusatzgerät (5) einerseits an die Fernsehantenne (1), andererseits an das Fernsehgerät (3) angeschlossen, insbesondere zwischen Fernsehantenne (1) und Fernsehgerät (3) geschaltet ist, daß das Datenzusatzgerät (5) außerdem ein Dateneingabeteil (7) und einen mit dem Dateneingabeteil (7) verbundenen Synchronschalter (10) aufweist und daß am Empfangsort automatisch mittels des Synchronschalters (10) die Wegschaltung oder Überlagerung des Fernsehbildes am festgelegten Ort und mittels des Dateneingabeteils (7) über den Synchronschalter (10) die Einbringung der zu erfassenden Daten am festgelegten Ort in das Fernsehbild erfolgt.

2. Vorrichtung nach Anspruch 1, dadurch gekennzeichnet, daß das Datenerfassungsteil (8) mit einem auf dem Bildschirm (4) des Fernsehgerätes (3) am vorgesehenen Ort des Fernsehbildes fest angeordneten optischen Empfänger (9) verbunden ist, der eine oder mehrere Fotozellen, Fotodioden, Fototransistoren, Fotothyristoren od. dgl. aufweist und die Daten optisch erfaßt.

3. Vorrichtung nach Anspruch 1, dadurch gekennzeichnet, daß das Datenerfassungsteil (8) mit einem Videoausgang (11) des Fernsehgerätes (3) verbunden ist, über den die Daten elektronisch erfaßbar sind.

4. Vorrichtung nach einem der Ansprüche 1 bis 3, dadurch gekennzeichnet, daß das Datenzusatzgerät (5) einen Tuner (13) und eine Abstimmsteuerung (14) zum Nachsteuern des Kanals, auf den das Datenzusatzgerät (5) eingestellt ist, aufweist und damit die Anwesenheit von Daten am festgelegten Ort des Fernsehbildes zur Kanalidentifikation nutzbar ist.

5. Vorrichtung nach einem der Ansprüche 1 bis 3, dadurch gekennzeichnet, daß das Dateneingabeteil einen durchstimmbaren Oszillator aufweist und von diesem eine senderspezifische Hilfsfrequenz abteilbar und an den Synchronschalter abgebbar ist.

## Claims

1. An apparatus to record data of the actions of switching on television receivers by viewers, with a television receiver (3) located at the point of reception, attached to a television aerial (1), with a screen (4) and with an associated data attachment (5) with a data recorder (8), in which a fixed, stipulated part of the television picture shown on the screen (4) of the switched-on television receiver (3) is switched off or overlaid and in this area various types of data relevant to the action of switching on the television receiver, including the channel number, period of switching on, viewer identification, etc, are available in the television picture, preferably in coded form, and in which the data can be automatically picked up from this part of the television picture by means of the data recorder (8), characterized in that the data attachment (5) is connected on one hand to the television aerial (1) and on the other hand to the television receiver (3), especially is connected between the television aerial (1) and the television receiver (3), that the data attachment (5) also possesses a data input (7) and a synchronous switch (10) combined with the data input, and that at the point of reception the switching-off or overlaying of the television picture in the specified area takes place automatically by means of the synchronous switch (10) and the introduction of the data to be recorded at the specified area in the television picture takes place automatically by means of the data input (7) via the synchronous switch (10).

2. An apparatus according to Claim 1, characterized in that the data recorder (8) is connected to an optical receiver (9), firmly fixed to the screen (4) of the television receiver (3) at the specified area of the television picture, that possesses one or more photocells, photodiodes, phototransistors, photothyristors or the like and records the data optically.

3. An apparatus according to Claim 1, characterized in that the data recorder (8) is connected to a video output socket (11) of the television receiver (3) from which the data can be recorded electronically.

4. An apparatus according to one of Claims 1 to 3, characterized in that the data attachment (5) possesses a tuner (13) and a tuner steering control (14) to adjust the channel to which the data attachment (5) is tuned, and thereby the presence of data at the specified part of the television picture is useable for channel identification.

5. An apparatus according to one of Claims 1 to 3, characterized in that the data input possesses an adjustable-frequency oscillator and an auxiliary frequency specific to the transmitter can be derived from this and transferred to the synchronous switch.

## Revendications

1. Dispositif en vue d'enregistrer des données au sujet du comportement de téléspectateurs quant à la mise en service d'un téléviseur, ce dispositif comportant un appareil de télévision (3) disposé à l'endroit de réception et raccordé à une antenne de télévision (1), cet appareil de télévision comportant un écran (4) et un appareil complémentaire de données (5) qui lui est attribué, cet appareil complémentaire de données comportant un élément d'enregistrement de données (8), l'image de télévision reproduite sur l'écran (4) de l'appareil de télévision (3) mis en service étant mise à l'écart ou superposée à un endroit fixé déterminé, tandis qu'à cet endroit, différentes données apparentées au comportement des téléspectateurs quant à la mise en service de téléviseurs, notamment le numéro de canal, la durée de mise en service, l'identification du spectateur, etc., sont présentes, de préférence, sous forme codée, dans l'image de télévision, ces données pouvant être prélevées automatiquement de cet endroit de l'image de télévision à l'intervention de l'élément d'enregistrement de données (8), caractérisé en ce que l'appareil complémentaire de données (5), raccordé d'une part à l'antenne de télévision (1), d'autre part à l'appareil de télévision (3), est positionné, en particulier, entre l'antenne de télévision (1) et l'appareil de télévision (3), en ce que l'appareil complémentaire de données (5) comprend, en outre, un élément d'introduction des données (7) et un commutateur synchrone (10) raccordé à l'élément d'introduction des données (7), et en ce que, à l'endroit de réception, la mise à l'écart ou la superposition de l'image de télévision a lieu automatiquement à l'intervention du commutateur synchrone (10), à l'endroit fixe précité, tandis que l'introduction des données à enregistrer dans l'image de télévision, a lieu à l'intervention de l'élément d'introduction de données (7) via le commutateur synchrone (10), à ce même endroit fixe.

2. Dispositif selon la revendication 1, caractérisé en ce que l'élément d'enregistrement de données (8) est raccordé à un récepteur optique (9) fixé solidairement à l'écran (4) de l'appareil de télévision (3) à l'endroit prévu de l'image de télévision, ce récepteur comportant une ou plusieurs cellules photoélectriques, une ou plusieurs photodiodes, un ou plusieurs phototransistors, un ou plusieurs photothyristors, ou analogues et enregistrant optiquement les données.

3. Dispositif selon la revendication 1, caractérisé en ce que l'élément d'enregistrement des données (8) est raccordé à une sortie vidéo (11) de l'appareil de télévision (3), par laquelle les données peuvent être enregistrées optiquement.

4. Dispositif selon une des revendications 1 à 3, caractérisé en ce que l'appareil complémentaire de données (5) comporte un syntoniseur (13) et une commande d'harmonisation (14) pour le réglage ultérieur du canal sur lequel est réglé l'appareil complémentaire de données (5), permettant ainsi d'utiliser la présence de données à l'endroit fixe de l'image de télévision pour l'identification du canal.

5. Dispositif selon une des revendications 1 à 3, caractérisé en ce que l'élément d'introduction de données comporte un oscillateur à fréquence variable, tandis qu'une fréquence auxiliaire spécifique à l'émetteur peut en être prélevée et acheminée au commutateur synchrone.

Fig.1

EP 0 127 068 B1

Fig. 2

EP 0 127 068 B1